# EUROPÄISCHE PATENTSCHRIFT

(11) **EP 0 552 427 B1**
(45) Veröffentlichungstag und Bekanntmachung des Hinweises auf die Patenterteilung: **17.07.1996**
(21) Anmeldenummer: 92118613.6
(22) Anmeldetag: 30.10.1992
(51) Int. Cl.: B03B 9/06, B09B 5/00

(54) **Verfahren zur Aufarbeitung nicht mehr verwendbarer Brems- und Kupplungsbeläge**
Method of processing non-recyclable brake and clutch linings
Procédé pour le traitement de garnitures de frein et d'embrayage non-recyclables

(30) Priorität: 24.01.1992 DE 4201893
(43) Veröffentlichungstag der Anmeldung: 28.07.1993
(73) Patentinhaber: RÜTGERS PAGID AKTIENGESELLSCHAFT, 45356 Essen (DE)
(72) Erfinder: Eckert, Armin, W-4355 Waltrop (DE); Dehon, Herman, B-6060 Gilly (BE); Kempfert, Joachim, W-6242 Kronberg 2 (DE); Oeste, Franz Dietrich, W-6309 Münzenberg (DE)
(74) Vertreter: Hosbach, Hans Ulrich

(56) Entgegenhaltungen:
- WO-A-88/04964
- DE-A- 4 004 201
- US-A- 4 588 050
- SOVIET INVENTIONS ILLUSTRATED Week C29, 27. August 1980 Derwent Publications Ltd., London, GB; AN G3018C/29 & SU-A-700 295 (CHLAIDZE) 5. Dezember 1979
- SOVIET INVENTIONS ILLUSTRATED Week C07, 26. März 1980 Derwent Publications Ltd. , London, GB; AN B5324C/07 & SU-A-664 769 (CHLAIDZE) 30. Mai 1979

## Beschreibung

Die Erfindung betrifft ein Verfahren zur Aufarbeitung nicht mehr verwendbarer Brems- und Kupplungsbeläge, beispielsweise aus Fehlchargen oder mit teilweise abgenutzten Reibbelägen, mit organisch gebundenen Reibbelägen.

Bei Bremsbacken für Trommelbremsen, insbesondere bei solchen mit aufgenieteten Reibbelägen, ist es üblich, den Träger mit einem neuen Reibbelag zu versehen. Dabei wird der alte Belag entweder mechanisch oder durch Verbrennen in einem Ofen entfernt. Im letzteren Fall muß die Temperatur hoch genug sein, um den Belag und den Kleber zu carbonisieren, jedoch nicht so hoch, daß der Belagträger geschädigt wird. Nachteilig ist dabei, daß durch den thermischen Abbau des Bindemittels und des Klebers gasförmige Schadstoffe freigesetzt werden. Die Bremsbacken werden anschließend gereinigt und können wiederverwendet werden, soweit sie noch die an sie gestellten Anforderungen wie Maßhaltigkeit und Festigkeit erfüllen.

Für Scheibenbremsbeläge, Kupplungsbeläge und Industriebeläge gibt es bisher keine geeigneten Aufarbeitungsverfahren, die zumindest eine teilweise Wiederverwendung ermöglichen.

Es bestand daher die Aufgabe, ein Verfahren zur Aufarbeitung nicht mehr verwendbarer Brems- und Kupplungsbeläge zu entwickeln, bei dem zumindest ein Teil der Beläge in wiederverwendbarer Form erhalten wird und der Rest zumindest umweltschonend entsorgt wird.

Die Aufgabe wird erfindungsgemäß dadurch gelöst, daß die Beläge zunächst nach Verwendungsart vorsortiert werden, wobei Beläge mit schadhaften Trägern und Sinterbeläge separat gesammelt werden, danach werden sortenweise Träger und Belagmasse getrennt, die Träger werden gereinigt und nach Form und Größe sortiert, bevor sie auf Maßhaltigkeit und Festigkeitseigenschaften geprüft werden, wobei der Ausschuß abgetrennt und die wiederverwendbaren Träger in üblicher Weise für die Neubelegung vorbereitet werden, während Beläge mit schadhaften Trägern und Sinterbeläge, Belagmassen und aussortierte Träger ggf. mit Reststoffen aus der Reibbelagfertigung als Zuschlagstoffe bei Stahl- und fußschmelzen eingesetzt werden.

Die Vorsortierung der Beläge kann leicht an Sammelstellen wie z. B. beim Hersteller, in Werkstätten und Tankstellen durchgeführt werden. Sortiert wird nach Bauart (Scheibenbremsbelag, Trommelbremsbelag, Kupplungsbelag usw.) und nach Größe (Eisenbahn, LKW, PKW, Motorrad). Da die Beläge bei Werkstätten und Tankstellen in jeweils geringer Stückzahl über die Zeit verteilt anfallen, bereitet das Vorsortieren keine Schwierigkeiten. Sinterbeläge und Beläge mit erkennbar schadhaftem Träger (Rückenplatte, Bremsschuh, Bremsbacke, Kupplungsscheibe usw.) können gleichzeitig ausgesondert werden. Beim Reibbelaghersteller fallen vor allem Beläge aus Fehlchargen an, die also bereits sortiert sind. Ein Sortieren der Träger nach Form und Größe kann hier häufig entfallen. Bei stark verschmutzten, gebrauchten Belägen ist es sinnvoll, diese vor dem Trennen von Träger und Belagmasse zu waschen.

Um das Abtrennen der Belagmasse von dem Träger zu erleichtern, kann die Belagmasse samt Kleber, wie vorstehend beschrieben, in einem Ofen carbonisiert werden. Die dabei auftretende Freisetzung von Schadgasen wird vermieden, wenn die Beläge z. B. in flüssigem Stickstoff oder in flüssiger Luft soweit gekühlt werden, daß die Reibmasse versprödet und sich von dem Träger ablösen läßt. Dieses Verfahren ist jedoch relativ kostenaufwendig. Es wird daher vorgeschlagen, den Träger beispielsweise induktiv, durch Strahlung oder direkten Kontakt mit heißen Flächen nur soweit zu erhitzen, daß sich die Kleberschicht zersetzt und dann die Belagmasse mechanisch zu entfernen. Dadurch wird die Freisetzung von Schadgasen minimiert.

Die Träger werden vorzugsweise durch Sandstrahlen oder Gleitschleifen gereinigt. Wenn das Sortieren nach Größe und Form nicht von Hand vorgenommen wird, sondern durch optische Abtastung, kann gleichzeitig die Maßhaltigkeit geprüft werden. Zur Überprüfung der Festigkeitseigenschaften wird der Träger einer Härteprüfung nach DIN 50 351, DIN 50 133 oder DIN 50 103 unterzogen. Die nicht den Anforderungen genügenden Belagträger können als Stahlschrott entsorgt werden. Die Reibmassen von Fehlchargen können aufgemahlen und in den Reibmassengemischen zurückgeführt werden. Bei gebrauchten Reibmassen unbekannter Zusammensetzung ist dies nicht möglich. Nach dem Stand der Technik müßten sie verbrannt oder deponiert werden. Es wurde nun gefunden, daß diese Reibmassen zusammen mit den bei der Vorsortierung abgeschiedenen Belägen und ggf. auch mit den schadhaften Belagträgern als Zuschlagstoff bei Stahl- oder Gußschmelzen eingesetzt werden können. Die kohlenstoffhaltigen Bestandteile gehen in die Schlacke und die Metallkomponente, die überwiegend aus Eisen besteht, erhöht die Ausbeute. Die hohe Temperatur der Schmelze garantiert eine vollständige Verbrennung der organischen Bestandteile, so daß keine Schadgase entstehen können.

Es wurde gefunden, daß die in den Reibmassen enthaltenen Metalle auch in den Bremssohlen von Eisenbahnbremsen enthalten sind und zwar sowohl in Sinterbelägen wie auch in Gußbelägen. Aus diesem Grunde ist es besonders vorteilhaft zusätzlich Schleifstaub und ähnliche Reststoffe aus der Reibbelagfertigung vorzugsweise in verdichteter Form (Granulat, Schülpe, Brikett) in die Schmelze einzubringen.

Die Erfindung wird anhand des nachfolgenden Beispiels näher erläutert:

### BEISPIEL

In Vertragswerkstätten werden die ausgebauten Bremsbeläge als PKW-Scheibenbremsbeläge, PKW-Trommelbremsbeläge,LKW-Scheibenbremsbeläge und LKW-Trommelbremsbeläge getrennt gelagert. Dabei werden Beläge mit erkennbar schadhafter Rückenplatte, bzw. Bremsbacke und Sinterbeläge als Abfall aussortiert. Die so vorsortierten Reibbeläge werden einschließlich der als Abfall aussortierten an ein Recyclingunternehmen zur weiteren Verarbeitung weitergegeben.

Die PKW-Scheibenbremsbeläge durchlaufen dort zunächst eine Wäsche, um Öl, Staub, Rost und ähnliche locker anhaftenden Verschmutzungen zu entfernen. Anschließend durchlaufen die Beläge einen Induktionsofen mit Schutzgasatmosphäre, wo die Rückenplatten auf etwa 600 °C erhitzt werden. Dabei wird die Kleberschicht des Belages und auch des ggf. vorhandenen Dämpfungsbleches soweit zerstört, daß der Belag und das Dämpfungsblech nach dem Durchlaufen eines Riffelwalzenpaares abfallen. Durch die induktive Wärme wird außerdem der Schutzlack aufgebläht und versprödet. Die Rückenplatten werden über eine Schwingförderrinne mit Siebboden zur Sandstrahlvorrichtung gefördert. Dabei fallen die restlichen Reibbelagteile, wie z. B. die noch in den Bohrungen der Rückenplatten verbliebenen Stopfen und die Lackreste durch das Sieb in einem Sammelbehälter. Nach dem Sandstrahlen werden die Rückenplatten nach dem Entfernen eventueller Zubehörteile (Federn, Warnkontakte) vereinzelt und einem Härteprüfstand zur Bestimmung der Eindringtiefe nach DIN 50 103 (Rockwell B) zugeführt, um die Platten mit unzureichenden Materialeigenschaften auszuschleusen. Anschließend durchlaufen die Platten das optische Prüfgerät, wo sie nach Größe und Form sortiert werden. Dabei werden alle nicht maßhaltigen Teile abgetrennt. In die nach Form und Größe sortierten Rückenplatten wird ein Zeichen für bereits recyceltes Material eingeprägt. Danach werden sie den jeweiligen Reibbelagherstellern zur Neubelegung zugesandt.

Die in den Vertragswerkstätten bereits als Abfall aussortierten Beläge, nicht wiederverwendbares Zubehör und granulierte Reibmasse werden zusammen mit kompaktierten Reststoffen aus der Reibbelagfertigung einer Kupolofenmischung zur Herstellung von Gußeisenbremsbelägen für Eisenbahnen zugegeben.

Diese Kupolofenmischungen enthalten Roheisen, Stahlschrott, Koks, Kalkstein, Siliziumcarbid, Ferromangan und Eisenphosphid. Für Grauguß-Bremsklotzsohlen wird folgende chemische Zusammensetzung (DB-TL 918 179 Teil 1) gefordert:

| | |
|---|---|
| Gesamtkohlenstoff | 2,8 bis 3,3 % |
| gebundener Kohlenstoff | 0,7 +/- 0,2 % |
| Silizium | 1,2 bis 2,0 % |
| Mangan | 0,6 bis 0,2 % |
| Phosphor | 0,9 +/- 0,2 % |
| Schwefel | 0,1 bis 0,16 % |

Bei einer 1 %-Zumischung der genannten Abfallbeläge und Restreibmassen verändern sich die Eigenschaften der Bremsklotzsohlen nicht. Sie werden weiterhin lunker- und blasenfrei mit einem einheitlich grauem Bruchgefüge produziert. Die Schliffprobe zeigt, daß das Gußeisen perlitisches Grundgefüge hat und der Graphit in lamellarer Form vorliegt. Durch Spektralanalyse kann die chemische Zusammensetzung in den o. g. Grenzen nachgewiesen werden.

Die aussortierten Rückenplatten mit unzureichender Festigkeitseigenschaft oder Maßhaltigkeit werden als Stahlschrott eingesetzt, den sie in beliebiger Menge ersetzen können.

Die so hergestellen Bremsklotzsohlen zeigen unverändert gute reibtechnische Eigenschaften. Die bei dem Schmelzprozeß entstehende Schlacke wird in üblicher Weise granuliert und z. B. im Bauwesen weiterverarbeitet.

Die LKW-Scheibenbremsbeläge können ebenso wie die Trommelbremsbeläge, soweit diese nicht in den Vertragswerkstätten, z. B. durch Aufnieten neu belegt werden, in gleicher Weise wie die PKW-Scheibenbremsen aufgearbeitet und wiederverwertet werden. Das gilt auch für die hier nicht aufgeführten Kupplungs- und Industriebeläge.

## Patentansprüche

1. Verfahren zur Aufarbeitung von nicht mehr verwendbaren Brems- und Kupplungsbelägen, dadurch gekennzeichnet, daß die Beläge zunächst nach Verwendungsart vorsortiert werden, wobei Beläge mit schadhaften Trägern und Sinterbeläge separat gesammelt werden, danach werden sortenweise Träger und Belagmasse getrennt, die Träger werden gereinigt und nach Form und Größe getrennt, bevor sie auf Maßhaltigkeit und Festigkeitseigenschaften geprüft werden, wobei der Ausschuß abgetrennt und die wiederverwendbaren Träger in üblicher Weise für die Neubelegung vorbereitet werden, während die Beläge mit schadhaften Trägern, Sinterbeläge, Belagmassen und aussortierte Träger ggf. mit Reststoffen aus der Reibbelagfertigung als Zuschlagstoffe bei Stahl- und Gußschmelzen eingesetzt werden.

2. Verfahren nach Anspruch 1, dadurch gekennzeichnet, daß der Träger und Belagmasse verbindende Kleber durch Aufheizen des Trägers thermisch zersetzt wird, bevor Träger und Belagmasse voneinander getrennt werden.

3. Verfahren nach Anspruch 1 oder 2, dadurch gekennzeichnet, daß die Festigkeitseigenschaften des Trägers durch eine Härteprüfung ermittelt werden.

4. Verfahren nach einem der Ansprüche 1 bis 3, dadurch gekennzeichnet, daß die Beläge mit schadhaften Trägern, Sinterbeläge, Belagmassen, aussortierte Träger und ggf. Reststoffe aus der Reibbelagfertigung einer Kupolofenmischung zur Herstellung von Grauguß-Bremsklotzsohlen zugesetzt werden.

## Claims

1. A method of processing brake and clutch linings which are no longer usable, characterised in that the linings are first sorted according to the nature of use, wherein linings with damaged supports and sintered linings are collected separately, then the supports and lining material are separated according to type, the supports are cleaned and separated according to shape and size, before they are checked for accuracy to size and strength properties, wherein the waste is separated and the re-usable supports are prepared in a conventional manner for relining, while linings with damaged supports, sintered linings, lining material and sorted-out supports, optionally with residual materials from the friction lining manufacture, are used as additives in steel and cast metal smelting.

2. A method according to Claim 1, characterised in that the adhesive joining the support and the lining material is thermally decomposed by heating the support, before the support and the lining material are separated from each other.

3. A method according to Claim 1 or 2, characterised in that the strength properties of the support are determined by a hardness test.

4. A method according to one of Claims 1 to 3, characterised in that the linings with damaged supports, sintered linings, lining materials, sorted-out supports and optionally residual materials from the friction lining manufacture are added to a cupola furnace mixture for manufacturing cast iron brake shoe soles.

## Revendications

1. Procédé pour le traitement de garnitures non réutilisables de freins et d'embrayages, caractérisé en ce qu'on exécute tout d'abord un tri préalable des garnitures en fonction du type d'utilisation, et selon lequel on rassemble séparément des garnitures possédant des supports défectueux et des garnitures frittées, puis on sépare, en fonction du type, les supports et la masse de garnitures, on nettoie les supports et on les sépare en fonction de leur forme et de leur taille, avant de les contrôler en ce qui concerne leur conformité dimensionnelle et leurs caractéristiques de résistance, on sépare les éléments exclus et on applique un prétraitement, de façon usuelle, aux supports réutilisables, pour le regarnissage, tout en introduisant les garnitures comportant des supports défectueux, des garnitures frittées, des masses de garnitures et des supports éliminés par le tri, éventuellement avec des substances résiduelles provenant de la fabrication des garnitures à friction, en tant que matières d'addition dans la coulée de l'acier et de la fonte.

2. Procédé selon la revendication 1, caractérisé en ce que l'on décompose thermiquement des colles reliant le support et la masse de la garniture, par chauffage du support avant de séparer l'un de l'autre le support et la masse de la garniture.

3. Procédé selon la revendication 1 ou 2, caractérisé en ce que l'on détermine les caractéristiques de résistance du support au moyen d'un test de dureté.

4. Procédé selon l'une des revendications 1 à 3, caractérisé en ce que l'on ajoute les garnitures comportant des supports défectueux, des garnitures frittées, des masses de garniture, des supports éliminés par le tri et éventuellement des matières résiduelles provenant de la fabrication de garnitures à friction, à un mélange pour cubilot pour la fabrication de semelles de freins à tambour en fonte grise.
